# FASCICULE DE BREVET EUROPEEN

(11) **EP 1 144 966 B1**
(45) Date de publication et mention de la délivrance du brevet: **16.07.2003**
(21) Numéro de dépôt: 00929645.0
(22) Date de dépôt: 19.05.2000
(51) Int. Cl.: G01J 5/06, G01J 1/06

(54) **DETECTEUR THERMIQUE A ANGLE DE VUE LIMITE**
THERMISCHER DETEKTOR MIT BEGRENZTEM SICHTWINKEL
HEAT DETECTOR WITH A LIMITED ANGLE OF VIEW

(30) Priorité: 04.06.1999 FR 9907105
(43) Date de publication de la demande: 17.10.2001
(73) Titulaire: Thales, 75008 Paris (FR)
(72) Inventeur: MICHERON, François, Thomson-CSF Propriété Intell., F-94117 Arcueil Cedex (FR); JOLLIOT, Marie-Benoite, E., Thomson-CSF P. I., F-94117 Arcueil Cedex (FR); BERGINC, Gérard, Thomson-CSF Propriété Intellect., F-94117 Arcueil Cedex (FR)
(74) Mandataire: Vigand, Régis Louis Michel
(86) Numéro de dépôt international: FR0001377
(87) Numéro de publication internationale: WO00075615

(56) Documents cités:
- US-A- 4 431 918
- PATENT ABSTRACTS OF JAPAN vol. 011, no. 035 (P-542), 3 février 1987 (1987-02-03) & JP 61 205827 A (NEC CORP), 12 septembre 1986 (1986-09-12)
- PATENT ABSTRACTS OF JAPAN vol. 008, no. 001 (P-246), 6 janvier 1984 (1984-01-06) & JP 58 167928 A (MITSUBISHI DENKI KK), 4 octobre 1983 (1983-10-04)

## Description

L'invention concerne le domaine des détecteurs thermiques, notamment les détecteurs thermiques à hautes performances dits BLIP (« background limited performances » en anglais). Ces détecteurs thermiques ont une sensibilité qui est limitée théoriquement par le bruit de conductivité thermique entre le détecteur et le milieu extérieur. Ce bruit provient de la fluctuation de la quantité de photons venant du milieu extérieur et arrivant sur la surface du détecteur thermique.

Les détecteurs thermiques sont des détecteurs qui mesurent directement ou indirectement la chaleur produite par le rayonnement incident à détecter lorsque celui-ci arrive sur la surface du détecteur, chaleur qui se traduit par une élévation de température au niveau de la surface du détecteur. De préférence, le domaine spectral de sensibilité des détecteurs thermiques est situé dans l'infrarouge.

Généralement, la scène observée par un détecteur thermique est « vue » par celui-ci sous un certain angle de vue appelé angle de vue de la scène. Lorsque le détecteur thermique appartient à une architecture optique, l'angle de vue de la scène est déterminé par l'ouverture de l'optique d'entrée de l'architecture optique. Afin de limiter le bruit reçu par le détecteur thermique, il est intéressant de limiter l'angle de vue du détecteur thermique à un angle donné, de préférence égal à l'angle de vue de la scène. Ainsi, sans perte de signal, le bruit reçu par le détecteur thermique sera diminué.

Les détecteurs thermiques se subdivisent en deux familles, les détecteurs thermiques refroidis et les détecteurs thermiques non refroidis. Un détecteur thermique refroidi comporte généralement un écran froid. Cet écran froid est percé d'une ouverture laquelle limite l'angle de vue du détecteur à l'angle de vue de la scène. En effet, l'écran froid est à basse température, typiquement de l'ordre de 77 degrés Kelvin. Ainsi l'émission thermique de l'écran froid est négligeable devant l'émission thermique de la scène observée car celle-ci est beaucoup plus chaude, typiquement 300 degrés Kelvin. L'écran froid permet d'améliorer nettement les performances d'un détecteur thermique en limitant son angle de vue. De même l'ouverture de l'écran froid peut contenir un filtre spectral refroidi comme l'écran froid. Ainsi, le domaine spectral de sensibilité de détecteur thermique peut être réduit à certaines fenêtres correspondant avantageusement aux fenêtres de transparence atmosphérique.

Les détecteurs thermiques non refroidis ne possédant pas d'écran froid, cette solution est difficilement applicable sans les refroidir également, ce qui diminuerait leur intérêt. Par conséquent, l'invention s'applique tout particulièrement aux détecteurs non refroidis.

Selon l'art antérieur, plusieurs types de détecteurs thermiques non refroidis sont proposés. La plupart d'entre eux sont des détecteurs à microbolomètres, c'est-à-dire des détecteurs matriciels dont les pixels sont constitués par un matériau dont la résistance est variable en fonction de la température. Les pixels comportent une ou plusieurs couches selon le type de détecteur thermique. Cependant, une caractéristique commune à ces différents types de pixel est de comporter une couche absorbante qui absorbe la majeure partie du rayonnement incident même lors que celui-ci a une incidence rasante, c'est-à-dire fait un angle élevé avec la normale à la surface du détecteur.

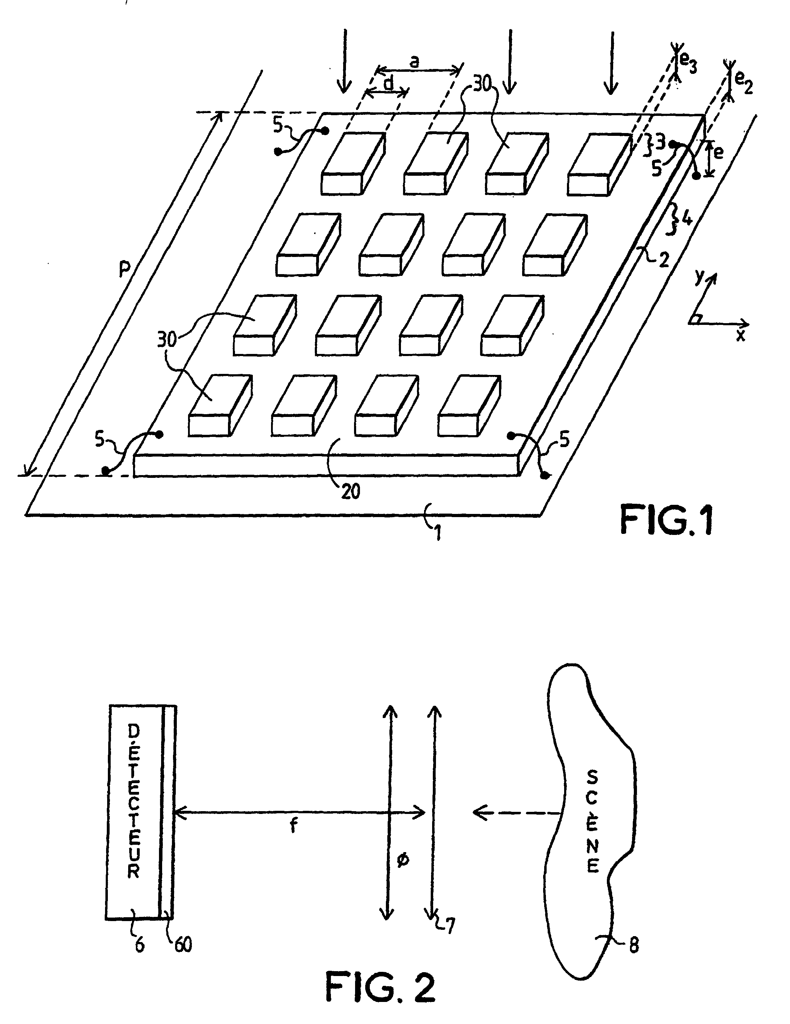

Le document US 4 431 918 propose d'intercaler outre le système optique d'entrée et le réseau de détecteurs une plaque pourvue d'ouvertures (figures 1 et 7), chaque ouverture correspondant à un détecteur. Cette grille ne laisse passer que les rayons d'angle d'incidence inférieur à une valeur limite, celle-ci étant directement fonction de l'épaisseur de la grille.

L'invention permet comme dans le cas des détecteurs thermiques refroidis de limiter l'angle de vue du détecteur, de préférence à l'angle de vue de la scène. Pour cela, chaque pixel est muni individuellement d'une structure bipériodique dont le pas est inférieur à la longueur d'onde moyenne du domaine spectral de sensibilité du détecteur et qui a pour effet de limiter l'angle de vue du détecteur thermique. Cette limitation est obtenu par le passage pour le pixel d'un état plutôt absorbant à un état plutôt réfléchissant en fonction de l'angle fait avec la normale à la surface du détecteur par le rayonnement incident lors de son arrivée sur la surface du détecteur thermique. Le choix des paramètres de cette structure bipériodique permet de limiter l'angle de vue du détecteur à la valeur requise par l'application particulière envisagée. Cette structure bipériodique est un réseau bipériodique de pavés élémentaires dont la sélectivité angulaire suffisamment élevée permet de satisfaire aux conditions habituelles des applications envisagées.

Selon l'invention, il est prévu un détecteur thermique matriciel non refroidi ayant un domaine spectral donné de sensibilité et étant constitué de pixels thermiquement isolés les uns des autres, chaque pixel comportant un élément absorbant thermosensible dans le domaine spectral de sensibilité, caractérisé en ce que sur la face, tournée vers le rayonnement incident à détecter, de chaque élément absorbant thermosensible, est disposé un réseau bipériodique de pavés élémentaires limitant l'angle de vue du détecteur, et en ce que le pas du réseau est inférieur à la longueur d'onde moyenne du domaine spectral de sensibilité.

L'invention sera mieux comprise et d'autres particularités et avantages apparaîtront à l'aide de la description ci-après et des dessins joints, donnés à titre d'exemples, où
- la figure 1 représente schématiquement la structure d'un type particulier de pixel dont le détecteur thermique selon l'invention est constitué ;
- la figure 2 représente schématiquement une architecture optique contenant un détecteur thermique selon l'invention.
- la figure 3 représente schématiquement un exemple mettant en évidence l'influence du pas du réseau sur la sélectivité angulaire du réseau dans un détecteur thermique selon l'invention ;
- la figure 4 représente schématiquement un exemple mettant en évidence la sélectivité spectrale d'un détecteur thermique selon l'invention.

La figure 1 représente schématiquement la structure d'un type particulier de pixel dont le détecteur thermique selon l'invention est constitué. Le détecteur thermique selon l'invention est un détecteur matriciel, c'est-à-dire qu'il est sous la forme d'une matrice bidimensionnelle de pixels individuels. L'un de ces pixels est représenté sur la figure 1. Le pixel est représenté en perspective. Le pixel est éclairé par un rayonnement incident issu du milieu extérieur et notamment de la scène à observer. Ce rayonnement se décompose d'une part en rayonnement incident à détecter qui est le signal utile représenté par des flèches en traits pleins et d'autre part en rayonnement parasite qui est du bruit. Le pixel comporte un élément 2 absorbant thermosensible sur le domaine spectral de sensibilité du détecteur thermique, c'est-à-dire un élément dont au moins une caractéristique mesurable varie en fonction de sa température. L'élément 2 absorbant thermosensible est préférentiellement plan. C'est par exemple un carré de côté p. L'élément 2 absorbant thermosensible peut comporter selon les technologies utilisées, une ou plusieurs couches de matériau, dont certaines peuvent alors être absorbantes, d'autres thermosensibles, d'autres encore isolantes, enfin certaines posséder plusieurs de ces propriétés à la fois. De préférence, cet élément 2 absorbant thermosensible comporte un microbolomètre, revêtu ou non d'une couche d'absorbant supplémentaire, la résistance de l'élément 2 étant alors fonction de sa température.

Le pixel comporte aussi des pavés 30 élémentaires. Les pavés 30 élémentaires sont placés sur l'une 20 des faces de l'élément 2 absorbant thermosensible. La face 20 de l'élément 2 portant les pavés 30 élémentaires est la face 20 tournée vers le rayonnement incident à détecter représenté par les flèches en traits pleins. La direction générale du rayonnement incident à détecter est généralement sensiblement selon la normale à la surface de l'élément 2 absorbant thermosensible. En choisissant le sens de propagation moyen du rayonnement incident à détecter comme sens haut bas, les pavés 30 élémentaires sont situés au-dessus de l'élément 2 absorbant thermosensible. L'ensemble de ces pavés 30 élémentaires forme un réseau 3 dont les pavés 30 élémentaires sont les motifs. Le réseau 3 peut par exemple être déposé ou même gravé sur l'élément 2 absorbant thermosensible. Le réseau 3 est bipériodique, c'est-à-dire périodique selon deux directions parallèles à la surface de l'élément 2 absorbant thermosensible. Les périodicités selon les deux axes X et Y sont avantageusement égales. Ces deux directions sont de préférence perpendiculaires, elles sont représentées par les axes X et Y. La direction moyenne du rayonnement incident à détecter est généralement perpendiculaire au plan formé par les axes X et Y.

Préférentiellement, le pixel comporte au-dessous de l'élément 2 absorbant thermosensible d'épaisseur e₂ un substrat 1 réfléchissant dans le domaine spectral de sensibilité du détecteur thermique. Le pixel comporte alors une couche 4 électriquement et thermiquement isolante qui est avantageusement constituée par du vide ou même de l'air. Le substrat 1 est de préférence commun à tous les pixels, mais les pixels demeurent tout de même thermiquement isolés les uns des autres par la présence de la couche 4 électriquement et thermiquement isolante. Le pixel comporte préférentiellement des pattes 5 de connexion électriques, en général deux ou bien quatre comme sur la figure 1, permettant la lecture directe ou indirecte de la caractéristique variable en fonction de la température de l'élément 2 absorbant thermosensible. La conductivité thermique de ces pattes 5 de connexion doit être la plus faible possible, au moins inférieure à un seuil donné qui dépend de l'application envisagée. Dans le cas préférentiel envisagé par la suite où la couche 4 est constituée par du vide, l'élément 2 absorbant thermosensible se présente sous la forme d'un micropont, à une ou plusieurs couches, suspendu au-dessus du substrat 1 réfléchissant à l'aide de plusieurs pattes 5 de connexion électrique.

Pour faciliter le phénomène d'absorption dont l'élément 2 absorbant thermosensible est le siège, l'épaisseur e₁ de la couche 4 de vide est de préférence choisie de manière à ce que d'une part un noeud de champ électrique se situe au niveau du substrat 1 réfléchissant et d'autre part un ventre de champ électrique se situe dans l'épaisseur e₂ de l'élément 2 absorbant thermosensible. La somme de l'épaisseur e₁ de la couche 4 électriquement et thermiquement isolante qui est ici du vide et de la demi épaisseur e₂/2 de l'élément 2 absorbant thermosensible vaut sensiblement le quart de la longueur d'onde moyenne λ₀ du domaine spectral de sensibilité du détecteur thermique. Ainsi l'effet d'absorption dans l'élément 2 absorbant thermosensible est maximal.

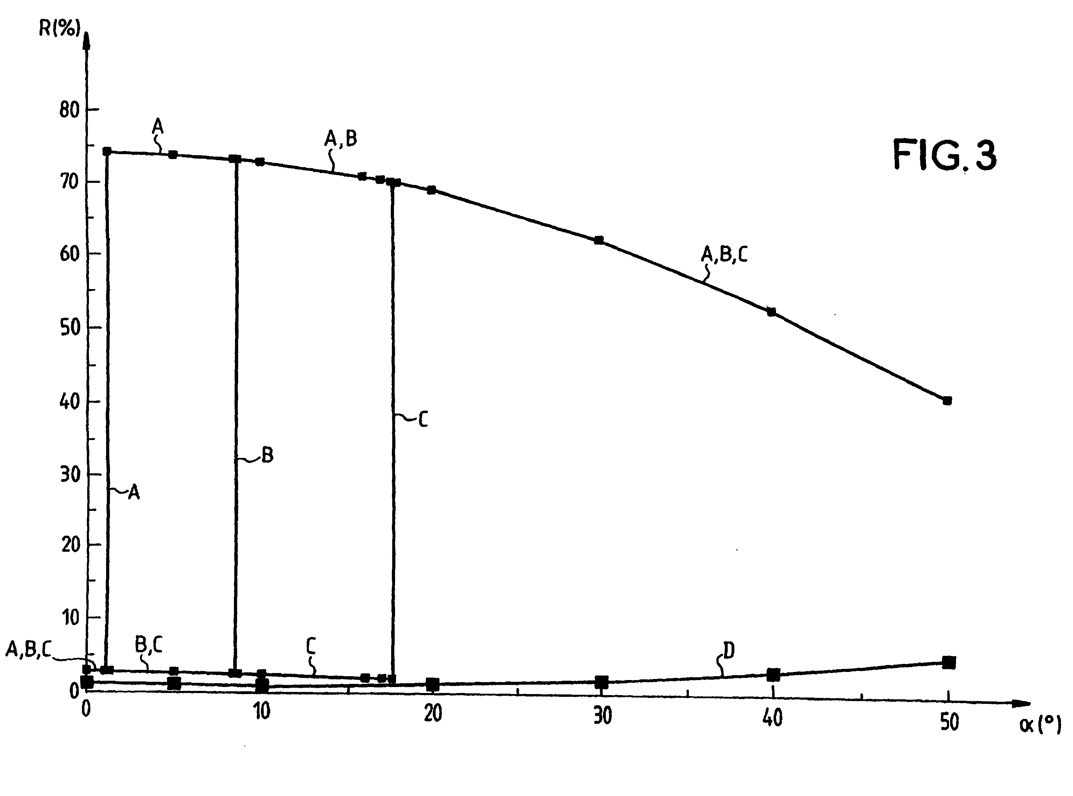

Le réseau 3 bipériodique de pavés 30 élémentaires a un pas a et une longueur d de pavé élémentaire. Le réseau 3 de pavés 30 élémentaires joue le rôle d'un élément spatialement résonnant qui limite l'angle de vue du détecteur à une valeur valant avantageusement l'angle de vue de la scène à observer. Le pas a du réseau joue un rôle important dans cette propriété, le pas a doit être inférieur à la longueur d'onde moyenne λ₀ du domaine spectral de sensibilité du détecteur. Des exemples de valeurs du pas a seront donnés à la figure 3. On constatera que plus le rapport a/λ₀ est faible et plus la valeur de l'angle de vue du détecteur est faible.

Le réseau 3 a une épaisseur e₃. Cette valeur doit être suffisante pour que le réseau 3 ait cet effet de sélectivité angulaire. Préférentiellement, le réseau 3 est épais, c'est-à-dire que le réseau 3 a une épaisseur e₃ supérieure au dixième de la longueur d'onde moyenne λ₀ du domaine spectral de sensibilité du détecteur. Cette épaisseur e₃ suffisamment importante permet de mieux contrôler par l'intermédiaire du réseau 3 les multiples réflexions du rayonnement incident qui se produisent au niveau des pavés 30 élémentaires du réseau 3 et qui contribuent à la valeur du coefficient global de réflexion du détecteur.

Les pavés 30 élémentaires ont par exemple une forme parallélépipédique comme sur la figure 1 qui a l'avantage de la simplicité. Les pavés 30 élémentaires ont de préférence une forme pyramidale permettant encore de favoriser l'absorption par réflexions multiples sur les pavés 30 élémentaires du réseau 3. Le sommet de la forme pyramidale est dirigée vers le haut, c'est-à-dire vers le rayonnement incident à détecter. La forme pyramidale permet également une meilleure adaptation d'impédance entre le milieu extérieur, généralement du vide ou de l'air, et le matériau constituant l'élément 2 absorbant thermosensible. Pour des raisons de symétrie de polarisation, les pavés 30 élémentaires ont des dimmensions égales selon les axes X et Y, ils se présentent alors comme des carrés, vu de haut.

Les pavés 30 élémentaires du réseau 3 sont en matériau de préférence électriquement conducteur. La conductivité électrique des pavés 30 élémentaires est intermédiaire entre les diélectriques et les conducteurs parfaits. L'application envisagée permettra de déterminer la conductivité optimale du matériau constituant les pavés 30 élémentaires. Le rapport ε"/ε' entre les parties imaginaire et réelle de la permittivité électrique du matériau est typiquement supérieur à l'unité. Le matériau est par exemple du type silicium amorphe dopé ou bien dioxyde de vanadium. Mais les autres matériaux employés comme absorbant thermosensible dans les détecteurs thermiques non refroidis peuvent convenir.

La figure 2 représente schématiquement un type d'architecture optique contenant un détecteur 6 thermique selon l'invention. La surface 60 est la surface sensible du détecteur 6 sur laquelle sont disposés les pixels décrits précédemment. L'architecture optique comporte également une optique 7 d'entrée collectant le rayonnement incident à détecter d'une scène 8 à observer. La direction générale du rayonnement incident à détecter est représenté par une flèche en pointillés. L'optique 7 d'entrée a une ouverture définie par son diamètre Φ et par sa focale f. L'angle de vue de la scène vaut 2Arctan(Φ/2f), ce qui vaut sensiblement Φ/f dans le cas d'angles relativement petits. Ainsi l'angle de vue du détecteur sera avantageusement limité à une valeur θ valant sensiblement 2Arctan(Φ/2f).

La taille de chaque pixel est de l'ordre de quelque fois la longueur d'onde maximale λₘ du domaine spectral de sensibilité du détecteur. Ainsi, dans la plupart des cas usuels, chaque pixel aura une surface qui couvre au moins la tache d'Airy pour la longueur d'onde maximale λₘ du domaine spectral de sensibilité du détecteur aboutissant ainsi à un bon rapport signal à bruit pour le détecteur thermique considéré puisque la tache d'Airy contient l'essentiel de l'énergie du rayonnement incident correspondant à un point de la scène. Le diamètre de cette tache d'Airy correspond au produit de l'ouverture de l'optique 7 d'entrée par la longueur d'onde maximale λₘ, valant ainsi 2λₘArctan(Φ/2f).

La figure 3 représente schématiquement un exemple mettant en évidence l'influence du pas a du réseau 3 sur la sélectivité angulaire du réseau 3 dans un détecteur thermique selon l'invention. L'exemple correspond à un détecteur thermique matriciel dont les pixels sont conformes à celui représenté sur la figure 1. Le domaine spectral de sensibilité est la bande III de l'infrarouge, la longueur d'onde moyenne considérée valant λ₀=10,6µm. L'épaisseur de la couche 4 de vide vaut e₁=1,45µm et l'épaisseur de l'élément 2 absorbant thermosensible vaut e₂=2,3µm. Le matériau de l'élément 2 est ici du silicium amorphe dopé dont les permittivités réelle et imaginaire relatives valent respectivement 1 et 1,68. L'épaisseur du réseau 3 de même matériau que l'élément 2 absorbant thermosensible, vaut e₃=2µm. Le rapport d/a pour les pavés élémentaires est pris égal à 0,9 et l'effet de différentes valeurs de pas a du réseau 3 sont étudiées. La taille de chaque pixel, c'est-à-dire le côté du carré formé par le pixel vaut environ p=50µm. Il y a donc environ une centaine de pavés 30 par réseau 3. Les valeurs qui suivent correspondent à un cas idéal ne prenant pas en considération le caractère fini du réseau 3.

La figure 3 représente la variation du coefficient de réflexion global R du détecteur thermique comportant un grand nombre de pixels, exprimée en pourcentage %, en fonction de l'angle d'incidence α du rayonnement incident par rapport à la normale à la surface du détecteur, exprimé en degrés °. Les courbes A, B et C représentent cette variation pour des valeurs du pas a du réseau 3 valant respectivement 4,85µm, 5µm et 5,2µm. Les seuils de limitation angulaire, assez abrupts, valent respectivement 1,5 degré, 8,5 degrés et 18 degrés. Le seuil de limitation angulaire apparaît comme très marqué, il correspond pour le détecteur au passage d'un état plutôt absorbant à un état plutôt réfléchissant. Pour des pas a du réseau 3 faiblement différents, l'effet de limitation angulaire apparaît pour des valeurs sensiblement différentes, la sélectivité angulaire est donc très sensible au pas a du réseau. Ainsi le choix d'un pas a du réseau 3 adapté à l'application envisagée permet d'obtenir la limitation voulue de l'angle de vue du détecteur correspondant avantageusement à l'angle de vue de la scène observée. La courbe D représente la variation du coefficient global de réflexion du détecteur en cas d'absence de réseau 3. Il est manifeste que le détecteur est alors dans un état absorbant quel que soit l'incidence du rayonnement incident, et que l'effet de limitation de l'angle de vue du détecteur est quasiment absent. Le réseau 3 de pavés 30 et de pas a inférieur à la longueur d'onde moyenne λ₀ du domaine spectral de sensibilité est à l'origine de cet effet de limitation de l'angle de vue du détecteur qui est très marqué.

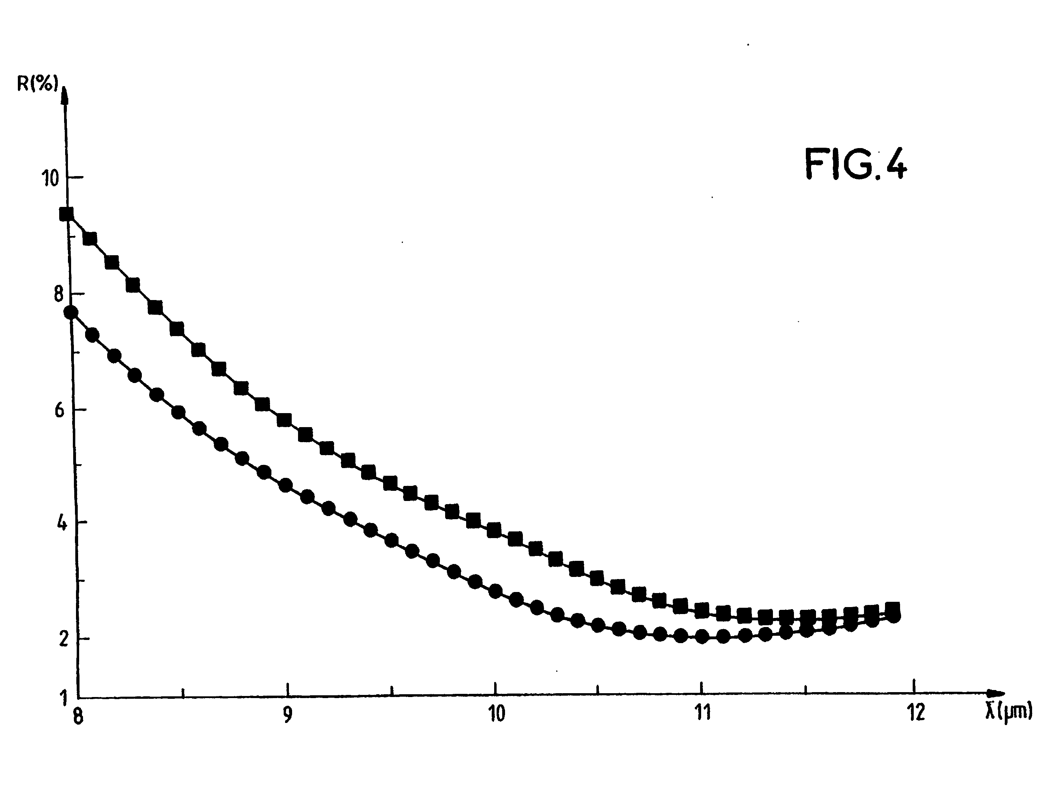

La figure 4 représente schématiquement un exemple mettant en évidence la sélectivité spectrale d'un détecteur thermique selon l'invention, elle concerne le même exemple de détecteur que celui de la figure 3. La figure 4 représente la variation du coefficient de réflexion global R, en pourcentage %, en fonction de la longueur d'onde incidente λ, exprimée en micromètres µm, chaque courbe correspondant à un pas a différent du réseau 3. Deux courbes sont représentées, la courbe des carrés correspondant à un pas a valant 5µm et la courbe des cercles correspondant à un pas a valant 5,2µm. L'incidence du rayonnement incident a été prise assez proche de la limite de l'angle de vue détecteur pour ces deux courbes, respectivement pour 5 et 15 degrés. Les courbes présentent un minimum assez plat autour d'une longueur d'onde λ valant 11µm, cependant l'effet sélectif est plus marqué au niveau des longueurs d'onde λ plus faibles, par exemple valant environ 8µm. Un détecteur thermique selon l'invention présente donc une certaine sélectivité spectrale. Dans certaines applications, celle-ci peut être utilisée pour augmenter encore l'absorption du détecteur thermique au niveau de certaines longueurs d'onde laser discrètes correspondant à des raies de laser agresseur. La protection du détecteur thermique contre les agressions laser est ainsi améliorée.

## Revendications

1. Détecteur thermique matriciel non refroidi ayant un domaine spectral donné de sensibilité et étant constitué de pixels thermiquement isolés les uns des autres, chaque pixel comportant un élément (2) absorbant thermosensible dans le domaine spectral de sensibilité, **caractérisé en ce que** sur la face (20), toumée vers le rayonnement incident à détecter, de chaque élément (2) absorbant thermosensible, est disposé un réseau (3) bipériodique de pavés (30) élémentaires limitant l'angle de vue du détecteur, et **en ce que** le pas (a) du réseau est inférieur à la longueur d'onde moyenne (λ₀) du domaine spectral de sensibilité.

2. Détecteur selon la revendication 1, **caractérisé en ce que** la taille de chaque pixel est de l'ordre de quelque fois la longueur d'onde maximale (λₘ) du domaine spectral de sensibilité.

3. Détecteur selon l'une quelconque des revendications précédentes, **caractérisé en ce que** le réseau (3) a une épaisseur (e₃) supérieure au dixième de la longueur d'onde moyenne (λ₀) du domaine spectral de sensibilité.

4. Détecteur selon l'une quelconque des revendications précédentes, **caractérisé en ce que** les pavés (30) élémentaires du réseau (3) sont de forme pyramidale.

5. Détecteur selon l'une quelconque des revendications précédentes, **caractérisé en ce que** les pavés (30) élémentaires du réseau (3) sont en matériau électriquement conducteur de conductivité intermédiaire entre les diélectriques et les conducteurs parfaits.

6. Détecteur selon l'une quelconque des revendications précédentes, **caractérisé en ce que** l'élément (2) absorbant thermosensible comporte une couche de matériau bolométrique.

7. Détecteur selon l'une quelconque des revendications précédentes, **caractérisé en ce que** chaque pixel comporte successivement, dans le sens de propagation du rayonnement incident à détecter, le réseau (3), l'élément (2) absorbant thermosensible, une couche (4) électriquement et thermiquement isolante, un substrat (1) réfléchissant dans le domaine spectral de sensibilité, et **en ce que** la couche (4) électriquement et thermiquement isolante a une épaisseur (e₁) telle que d'une part au niveau du substrat (1) réfléchissant se trouve un noeud de champ électrique et d'autre part au niveau de l'élément (2) absorbant thermosensible se trouve un ventre de champ électrique.

8. Détecteur selon la revendication 7, **caractérisé en ce que** la couche (4) électriquement et thermiquement isolante est constituée par du vide et **en ce que** l'élément (2) absorbant thermosensible est sous la forme d'un micropont relié au substrat (1) réfléchissant par des pattes (5) de connexion électrique dont la conductivité thermique est inférieure à un seuil donné.

9. Détecteur selon l'une quelconque des revendications 7 à 8, **caractérisé en ce que** la somme de l'épaisseur (e₁) de la couche (4) électriquement et thermiquement isolante et de la moitié de l'épaisseur (e₂) de l'élément (2) absorbant thermosensible vaut sensiblement le quart de la longueur d'onde moyenne (λ₀) du domaine spectral de sensibilité.

10. Architecture optique comportant un détecteur (6) selon l'une quelconque des revendications précédentes, **caractérisé en ce que** l'architecture optique comporte aussi une optique (7) d'entrée collectant le rayonnement incident à détecter et ayant un diamètre Φ et une focale f, l'angle de vue du détecteur est limitée à une valeur θ valant sensiblement 2Arctan(Φ/2f).

## Patentansprüche

1. Ungekühlter matrixförmiger Wärmedetektor, der einen gegebenen spektralen Empfindlichkeitsbereich besitzt und aus thermisch voneinander isolierten Bildelementen gebildet ist, wovon jedes ein in dem spektralen Empfindlichkeitsbereich wärmeempfindliches absorbierendes Element (2) aufweist, **dadurch gekennzeichnet, daß** auf der zu der erfassenden auftreffenden Strahlung gerichteten Fläche (20) jedes wärmeempfindlichen absorbierenden Elements (2) ein biperiodisches Gitter (3) aus elementaren Blöckchen (30), die den Blickwinkel des Detektors begrenzen, angeordnet ist und daß die Schrittweite (a) des Gitters kleiner als die mittlere Wellenlänge (λ₀) des spektralen Empfindlichkeitsbereichs ist.

2. Detektor nach Anspruch 1, **dadurch gekennzeichnet, daß** die Größe jedes Bildelements in der Größenordnung der mehrfachen maximalen Wellenlänge (λₘ) des spektralen Empfindlichkeitsbereichs liegt.

3. Detektor nach einem der vorhergehenden Ansprüche, **dadurch gekennzeichnet, daß** das Gitter (3) eine Dicke (e₃) hat, die größer als ein Zehntel der mittleren Wellenlänge (λ₀) des spektralen Empfindlichkeitsbereichs ist.

4. Detektor nach einem der vorhergehenden Ansprüche, **dadurch gekennzeichnet, daß** die elementaren Blöckchen (30) des Gitters (3) pyramidenförmig sind.

5. Detektor nach einem der vorhergehenden Ansprüche, **dadurch gekennzeichnet, daß** die elementaren Blöckchen (30) des Gitters (3) aus einem elektrisch leitenden Werkstoff mit einer mittleren spezifischen Leitfähigkeit zwischen den Dielektrika und den vollkommenen Leitern sind.

6. Detektor nach einem der vorhergehenden Ansprüche, **dadurch gekennzeichnet, daß** das wärmeempfindliche absorbierende Element (2) eine Schicht aus einem bolometrischen Werkstoff aufweist.

7. Detektor nach einem der vorhergehenden Ansprüche, **dadurch gekennzeichnet, daß** jedes Bildelement nacheinander in Ausbreitungsrichtung der zu erfassenden auftreffenden Strahlung das Gitter (3), das wärmeempfindliche absorbierende Element (2), eine elektrisch und thermisch isolierende Schicht (4) und ein im spektralen Empfindlichkeitsbereich reflektierendes Substrat (1) umfaßt und daß die elektrisch und thermisch isolierende Schicht (4) eine Dicke (e₁) hat, derart, daß sich einerseits auf Höhe des reflektierenden Substrats (1) ein Knoten des elektrischen Feldes befindet und daß sich sich andererseits auf Höhe des wärmeempfindlichen absorbierenden Elements (2) ein Bauch des elektrischen Feldes befindet.

8. Detektor nach Anspruch 7, **dadurch gekennzeichnet, daß** die elektrisch und thermisch isolierende Schicht (4) Vakuum ist und daß das wärmeempfindliche absorbierende Element (2) die Form einer Mikrobrücke hat, die mit dem reflektierenden Substrat (1) durch elektrische Verbindungsansätze (5) verbunden ist, deren Wärmeleitfähigkeit kleiner als ein gegebener Schwellenwert ist.

9. Detektor nach einem der Ansprüche 7 bis 8, **dadurch gekennzeichnet, daß** die Summe aus der Dicke (e₁) der elektrisch und thermisch isolierenden Schicht (4) und der Hälfte der Dicke (e₂) des wärmeempfindlichen absorbierenden Elements (2) im wesentlichen ein Viertel der mittleren Wellenlänge (λ₀) des spektralen Empfindlichkeitsbereichs ist.

10. Optische Architektur, die einen Detektor (6) nach einem der vorhergehenden Ansprüche umfaßt, **dadurch gekennzeichnet, daß** die optische Architektur außerdem eine Eingangsoptik (7) aufweist, die die zu erfassende auftreffende Strahlung sammelt und einen Durchmesser Φ sowie eine Brennweite f besitzt, wobei der Blickwinkel des Detektors auf einen Wert θ begrenzt ist, der im wesentlichen 2arctan(Φ/2f) beträgt.

## Claims

1. Uncooled thermal matrix detector having a given spectral sensitivity range and being formed of pixels which are thermally insulated from each other, each pixel comprising an absorbing element (2) which is thermosensitive in the spectral sensitivity range, **characterized in that** on the face (20), turned towards the incident radiation to be detected, of each thermosensitive absorbing element (2) is placed a biperiodic grating (3) of elementary blocks (30) limiting the viewing angle of the detector, and **in that** the pitch (a) of the grating is less than the mean wavelength (λ₀) of the spectral sensitivity range.

2. Detector according to Claim 1, **characterized in that** the size of each pixel is of the order of a few times the maximum wavelength (λₘ) of the spectral sensitivity range.

3. Detector according to either of the preceding claims, **characterized in that** the grating (3) has a thickness (e₃) which is greater than a tenth of the mean wavelength (λ₀) of the spectral sensitivity range.

4. Detector according to any one of the preceding claims, **characterized in that** the elementary blocks (30) of the grating (3) are of pyramidal shape.

5. Detector according to any one of the preceding claims, **characterized in that** the elementary blocks (30) of the grating (3) are made of an electrically conducting material of conductivity intermediate between dielectrics and perfect conductors.

6. Detector according to any one of the preceding claims, **characterized in that** the thermosensitive absorbing element (2) comprises a layer of a bolometric material.

7. Detector according to any one of the preceding claims, **characterized in that** each pixel comprises successively, in the direction of propagation of the incident radiation to be detected, the grating (3), the thermosensitive absorbing element (2), an electrically and thermally insulating layer (4), a substrate (1) reflecting in the spectral sensitivity range, and **in that** the electrically and thermally insulating layer (4) has a thickness (e₁) such that, on the one hand, at the reflecting substrate (1) there is an electric field node and, on the other hand, at the thermosensitive absorbing element (2) there is an electric field antinode.

8. Detector according to Claim 7, **characterized in that** the electrically and thermally insulating layer (4) is formed by a vacuum and **in that** the thermosensitive absorbing element (2) is in the form of a microbridge connected to the reflecting substrate (1) by electrical connection leads (5), the thermal conductivity of which is less than a given threshold.

9. Detector according to either of Claims 7 and 8, **characterized in that** the sum of the thickness (e₁) of the electrically and thermally insulating layer (4) and of half of the thickness (e₂) of the thermosensitive absorbing element (2) is almost equal to a quarter of the mean wavelength (λ₀) of the spectral sensitivity range.

10. Optical architecture comprising a detector (6) according to any one of the preceding claims, **characterized in that** the optical architecture also comprises entrance optics (7) collecting the incident radiation to be detected and having a diameter Φ and a focal length f, the viewing angle of the detector being limited to a value θ which is almost equal to 2 arctan (Φ/2f).
